# EUROPEAN PATENT SPECIFICATION

(11) **EP 3 394 457 B1**
(45) Date of publication and mention of the grant of the patent: **15.07.2020**
(21) Application number: 16831799.8
(22) Date of filing: 21.12.2016
(51) Int. Cl.: F16C 33/12, F16C 33/14, C23C 26/00

(54) **COATING OF A SYSTEM AND AN ASSOCIATED METHOD THEREOF**
BESCHICHTUNG EINES SYSTEMS UND VERFAHREN DAZU
REVÊTEMENT POUR UN SYSTEME ET METHODE D'APPLICATION

(30) Priority: 22.12.2015 IN 6842CH2015; 22.12.2015 IN 6841CH2015
(43) Date of publication of application: 31.10.2018
(73) Proprietor: AI ALPINE US BIDCO INC., Wilmington, Delaware 19801 (US)
(72) Inventor: SRIDHAR, Mandyam Ranagayan, Bangalore Kamataka 560080 (IN); DHANASEKARAN, Kesavan, Bangalore Kamataka 560066 (IN); FLYNN, Paul Lloyd, Lawrence Park PA 16531 (US)
(74) Representative: Torggler & Hofinger Patentanwälte
(86) International application number: PCT/US2016/068002
(87) International publication number: WO 2017/112761

(56) References cited:
- EP-A2- 1 079 110
- DE-A1- 3 634 708
- DE-A1-102009 060 924
- US-A1- 2008 166 578
- US-A1- 2012 114 971
- US-B1- 6 457 629

## Description

This invention relates generally to coatings of systems comprising an assembly having a journal bearing or a valve, and more particularly to friction surfacing coatings of such systems.

Sliding-type journal or engine bearings are typically used in combustion engine applications, for example, for journaling a shaft of the engine. Typical engine bearings and shafts have arcuate steel backing onto which one or more layers of other softer or harder materials are applied. The steel backing provides structural rigidity to the bearings and shaft whereas the coatings are required to provide a low friction sliding surface, acceptable wear, corrosion, cavitation, embedability, fatigue and seizure-resistance, and acceptable conformability to the bearings and shafts.

Generally, methods such as sputtering, electrochemical deposition, electroless plating, spraying, are used for providing multilayered coatings on the steel backing of bearings and shafts. However, methods such as electrochemical deposition, electroless plating, and spraying may not provide required density of the coatings and hence may compromise on the tough ness and fatigue resistance of the coating layers. Sputtering is an expensive method known to provide very thin coating layers. Therefore, sputtering may not be used to provide the required thickness of some of the coating layers. EP1 079 110 A2 relates to procedures for coating compressor components with metal, and, more particularly, to procedures for coating by friction surfacing process. The density of the coating is not discussed in this document.

Further, a mechanical joint is provided between the coated bearing and housing, resulting in a poor heat transfer during operation of the journal bearings. Furthermore, there is a possibility of failure of the journal bearings due to fretting between the bearing and the housing because of dirt/soot accumulation between the bearing and the housing.

Valves and valve seats of internal combustion engines are generally exposed to severe operating conditions during operation. The valve opens for intake of gases and closes for release of gases periodically during operation of the engine. An outer surface of the valve slides against an inner surface of the valve seat. Hence, an abrasion load is repeatedly applied to the contact surface of the valve seat. Consequently, over a period of time, both the surfaces of the valve and the valve seat are abraded. Wear related failures of the valve and valve seat components may affect the engine efficiency.

In conventional systems, valve and valve seat assemblies are generally lubricated using oil. The oil is not frequently retained in the valve and valve seats frequently resulting in loss of oil and decreased lubrication. As a result, the valve and the valve seats are subjected to wear.

Therefore, there is a need for an enhanced coating for a system having a journal bearing or a valve.

### BRIEF DESCRIPTION

Embodiments of the invention are directed towards systems including the coated journal bearings or shafts and valve systems, and an efficient method of coating.

In one embodiment, a method is disclosed. The method includes disposing a coating on a base of an assembly using a friction surfacing process, wherein the coating has a density greater than 98 percent of a theoretical density of the coating and a dilution less than 0.5 volume % of the coating. In an embodiment, the assembly is a journal bearing and a shaft. In another embodiment, the assembly is a valve and a value seat, wherein the coating is disposed on each of at least some dimples of a plurality of dimples formed on a surface of the base.

### BRIEF DESCRIPTION OF THE DRAWINGS

These and other advantages and features will be more readily understood from the following detailed description of preferred embodiments of the invention that is provided in connection with the accompanying drawings.
FIG. 1 is a schematic cross-sectional view of a system including a journal bearing and shaft according to an embodiment of the present invention;
FIG. 2 is an illustration of a friction surfacing method according to an embodiment of the present invention;
FIG. 3 is a schematic cross-sectional view of a system including a base and different coating layers according to an embodiment of the present invention;
FIG. 4 is a schematic cross-sectional view of a pin tool according to an embodiment of the present invention; and
FIG. 5 is a schematic cross-sectional view of a pin tool according to another embodiment of the present invention.
FIG. 6 is a schematic cross-sectional view of a system including a valve and valve seat according to an embodiment of the present invention;
FIG. 7 is a schematic cross-sectional view of a base according to an embodiment of FIG. 1;
FIG. 8 is a perspective view of a friction surfacing apparatus according to some embodiments of the present invention;
FIG. 9 is a schematic representation of a base having a plurality of dimples formed on a surface according to an embodiment of the present invention;
FIG. 10 is a schematic cross-sectional view of a base and a coating according to an embodiment of the present invention;
FIG. 11 is a schematic cross-sectional view of a base and a coating according to another embodiment of the present invention;
FIG. 12 is a schematic cross-sectional view of a pin tool according to an embodiment of the present invention;
FIG. 13 is a schematic cross-sectional view of a pin tool according to another embodiment of the present invention;
FIG. 14 is a schematic cross-sectional view of a base and a coating according to an embodiment of the present invention; and
FIG. 15 is a schematic cross-sectional view of an internal combustion engine according to an embodiment of the present invention.

### DETAILED DESCRIPTION

Aspects of the present invention will now be described in more detail with reference to exemplary embodiments thereof as shown in the appended drawings. While the present invention is described below with reference to preferred embodiments, it should be understood that the present invention is not limited thereto. Those of ordinary skill in the art having access to the teachings herein will recognize additional implementations, modifications, and embodiments, as well as other fields of use, which are within the scope of the present invention as disclosed and claimed herein, and with respect to which the present invention could be of significant utility.

In the following description, whenever a particular aspect or feature of an embodiment of the invention is said to comprise or consist of at least one element of a group and combinations thereof, it is understood that the aspect or feature may comprise or consist of any of the elements of the group, either individually or in combination with any of the other elements of that group.

In the following specification and the claims that follow, the singular forms "a," "an," and "the" include plural referents unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about" or "substantially," may not be limited to the precise value specified, and may include values that differ from the specified value. In at least some instances, the approximating language may correspond to the precision of an instrument for measuring the value.

An aspect of the present invention is directed to a coating for a system having an assembly comprising a shaft and a journal bearing. Journal bearing systems may be used in different types of engines such as, for example, internal combustion engines and reciprocating engines. Failure of engine journals and journal bearings can affect operation of the engines. Journal and bearing damage may occur due to fatigue, wear, corrosion, embedability, seizure and cavitation.

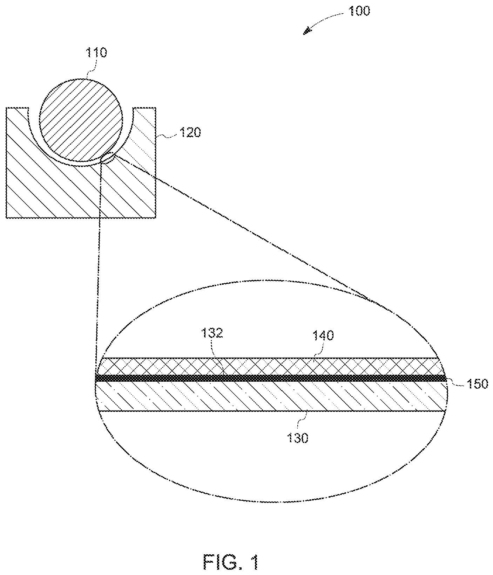

FIG. 1 is a schematic representation of a system 100 in accordance with some embodiments of the present invention. The system 100 includes a journal (alternatively referred to as shaft) 110 and a journal bearing 120 coupled to the shaft 110. As used herein, the phrase "journal bearing 120 coupled to the shaft 110" means that the journal bearing 120 and the shaft 110 operate as a pair during the operation of the system 100 and does not necessarily indicate any physical bonding between the journal bearing 120 and the shaft 110. At least one of the journal bearing 120 and the shaft 110, includes a base 130 and at least one coating layer 140 disposed on the base 130. The base 130 includes a heat-affected zone 150 bonded to one layer of the at least one coating layer 140 at an interface 132 of the base 130 and the one layer 140. The heat-affected zone 150 has a thickness less than 5 micrometers. A coating thickness of the one layer 140 is greater than 50 micrometers. A density of the one layer 140 is greater than 98 % of a theoretical density of the one layer 140. A dilution of the one layer 140 is less than 0.5 volume percent (%) of the one layer. As used herein, a "dilution of the one layer 140" is an inclusion of any impurity, such as, for example, any other material other than the coating material of the one layer 140.

Some aspects of the present invention are related to a method of forming the at least one coating layer 140 on the base 130 of at least one of the journal bearing 120 and the shaft 110 of the system 100. In some embodiments, on layer 140 of the at least one coating layer 140 is formed, using a friction surfacing method. Coatings formed using a friction surfacing process facilitates to limit the thickness of the heat-affected zone 150 of the base 130 to less than 5 micrometers.

Hardness and toughness of the base 130 and the one layer of the at least one coating layer 140 may vary depending on the applications, for example, depending on whether the one layer 140 is applied to the journal 110 or the journal bearing 120. In one embodiment, for the journal 110, the one layer 140 may include a harder material than the material of the base 130. For example, the base 130 may include a hard material including steel, and the coating layer 140 may include a harder material including Stellites™. In some embodiments, the base 130 has a first hardness and the one layer 140 has a second hardness less than the first hardness. Non limiting examples of the material of the base 130 may include steel, Stellites™, titanium, or any combinations thereof. Non-limiting examples of the material of the one layer 140 may include bronze, leaded bronze, aluminum-based alloys, and copper-based alloys. In certain embodiments, the base 130 has a first toughness and the one layer 140 has a second toughness less than the first toughness.

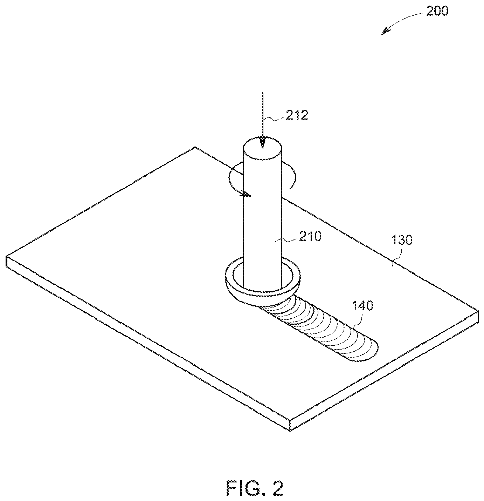

Referring to FIG. 2, a perspective view of a friction surfacing apparatus 200 is illustrated according to some embodiments of the present invention. The friction surfacing apparatus 200 includes a movable pin tool 210. In the illustrated embodiment, the pin tool 210 has a substantially cylindrical, rod-like shape. The pin tool 210 may be a solid rod or may be partially or entirely hollow. The pin tool 210 can have any diameter depending on the application and apparatus specifications. In some embodiments, the diameter of the pin tool 210 is in a range from about 0.50 mm to about 50 mm.

The pin tool 210 may be coupled to a drive mechanism (not shown), such as, for example, a spindle. The drive mechanism may be operable for rotating the pin tool 210 about an axis 212 of the pin tool 210. Typically, the pin tool 210 is rotated at a speed in a range from about 100 revolutions per minute (rpm) to about 100,000 rpm during the friction surfacing process. Rotation of the pin tool 210, in conjunction with a forging load imposed between the pin tool 210 and the base 130, provides a combination of frictional heat and thermo-mechanical work. As a result, the pin tool 210 is subjected to frictional heat to a temperature below its melting point causing plasticization and deposition of material of the pin tool 210 to the surface of the base 130. The amount of material deposited by the pin tool 210 may be dependent on the rotational speed of the pin tool 210, the feed rate of the pin tool 210, and the traverse speed of the friction surfacing apparatus 200. The pin tool 210 may be made of a material that is same as, similar to, or dissimilar from a material of the base 130. For example, if the base is made of a metal or metal alloy, the pin tool 210 can be made of the same metal or metal alloy, or similar metal or metal alloy, or dissimilar material that provides a desired characteristic when the pin tool material is deposited on the base 130.

During operation, the pin tool 210 is fed at a desired feed rate while rotating the pin tool 210 and traversing it along the base 130. In some embodiments, the feed rate may range from about 2 millimeters per minute (mm/minute) to about 100 mm/minute. It should be noted that the feed rate of the pin tool 210 may vary based upon pin tool material(s) and the material(s) of the base 130.

During operation, a temperature of a tip of the pin tool 210 is maintained at a range in which the pin tool material is substantially plastic. For example, the temperature of the tip of the pin tool 210 may be maintained in a range from about 800° C to about 1000° C for copper and copper alloys; from about 875° C to about 1075° C for different steels and nickel alloys, and from about 1100° C to about 1300° C for titanium and titanium alloys.

As the pin tool 210 is traversed along the base 130, the plasticized metal, metal alloy, or other material of the pin tool 210 is transferred, forming a deposit (coating) of the pin tool material on the surface of the base 130. The pin tool 210 is substantially continuously fed along the surface of the base 130 such that the pin tool material is coated on the surface of the base 130. The pin tool 210 may be traversed along the surface of the base 130 at a rate that is sufficient to deposit a desired amount of material on the surface of the base 130. For example, in some embodiments, the pin tool 210 may traverse along the surface of the base 130 at a rate in a range of from about 2 mm/minute to about 400 mm/minute.

A continuous forging action on the pin tool 210 improves the mechanical bond between the deposited pin tool material and the base 130, refines the microstructure of deposited pin tool 210 material, and minimizes any flash during operation.

The localized plastic deformation of the pin tool 210 results in a crystalline microstructure and very low porosity. In some embodiments, relatively thick coatings may be disposed using the friction surfacing methods as compared to some other standard coating methods, such as, for example, sputtering. For example, thickness greater than 50 micrometers may be achieved by the friction surfacing method by a single pass. In some embodiments, the thickness of the coating material may further be increased at a single location on the base 130, by performing multiple passes of the pin tool 210. The pin tool 210 composed of similar or dissimilar materials may be subjected to sequential passes to form a monolithic or graded coating. In some other embodiments, linear, angular and/or contoured coating may be formed.

In accordance with the embodiments of the present invention, the friction surfacing apparatus 200 may be used to deposit similar or dissimilar material on a wide variety of base materials, such as cobalt-based alloys, titanium alloys, iron based alloys (including steel), copper-based alloys, aluminum-based alloys and the like. The exemplary journal and journal bearings may be suitable for any applications that include, but not limited to, turbo-machinery applications, such as gas turbine, steam turbine, and aircraft engines.

The exemplary friction surfacing method described herein provides benefits including: 1) minimal solidification cracking, porosity, or segregation; 2) a fine, hot-worked metallurgical structure; 3) mechanical properties of the deposited or bonded zone material that are equivalent to or better than the base material; 4) lower heat input to the base material that helps to reduce residual stresses and distortion and does not adversely affect the structure and properties of the base material and 5) ability to tailor the local chemistry, metallurgical structure, and mechanical properties of specific areas or coating of the components.

With reference to FIGS. 1 and 2, the heat-affected zone 150 is defined as the portion of the base 130 that is affected by the process of providing the one layer of the at least one coating layer 140. When a friction surfacing method is used to provide the one layer 140 on the base 130, the heat-affected zone 150 is a top portion of the base 130 that is affected while providing the one coating layer 140. As used herein, a portion or zone of the base 130 is said to be "heat-affected" if any physical or chemical characteristics of the portion is changed to an extent greater than 5% when compared to remaining portion of the base 130 which is not affected by the coating process. The physical characteristics may include, for example, the structure, microstructure, and density of the heat affected zone. The chemical characteristics may include, for example, the material composition or the crystal structure of the heat affected zone.

The heat-affected zone 150 is formed by the heat and friction generated by the coating process of the pin tool 210 while depositing the one coating layer 140 on the base 130. Therefore, in some embodiments, the heat-affected zone 150 of the base 130 connects the base 130 to the one coating layer 140.

In some embodiments, the heat-affected zone 150 is a very thin layer of the base 130. This may be particularly advantageous over a thicker heat-affected zone, as a thick heat-affected zone may include weak zones of coarse microstructure and low hardness, where failure may be initiated. Therefore, in some embodiments, a well-adhering and effective coating is provided on the base 130 without substantially changing the mechanical characteristics of the base 130 during the coating process. Therefore, a desired base material may be designed before-hand without the need to accommodate any further substantial changes during the process of coating. In some embodiments, a thickness of the heat-affected zone 150 of the base 130 is less than 5 micrometers. In some embodiments, the thickness of the heat-affected zone is less than 2 micrometers, and in certain embodiments, the thickness of the heat-affected zone 150 of the base 130 is less than 1 micrometer.

In some embodiments, a coating thickness of the one coating layer 140 is greater than 50 micrometers. In some specific embodiments, the coating thickness of the one coating layer 140 may be greater than about 75 micrometers. A coating thickness of the one coating layer 140 may be designed, such as, for example, to be greater than 100 micrometers, or greater than 500 micrometers, or greater than 1 millimeter, or greater than 2 millimeters depending on the application of the one coating layer 140.

According to the invention, a density of the one coating layer 140 is greater than 98 % of a theoretical density of the one coating layer 140. As used herein, the "theoretical density" is the "true density" defined as the mass per volume of the material of the one coating layer 140, excluding all the pores. The theoretical density may further be calculated from the crystallographic data of the material composition of the one coating layer 140. In some embodiments, a crystal grain size of the one coating layer 140 that is obtained by the friction surfacing method, is greater than 1 micrometer.

In the friction surfacing method disclosed herein, a mechanical mixing or stirring between the base material and the coating material is substantially less compared to some other thick coating methods of coating, such as, for example, tungsten inert gas (TIG), plasma transferred arc (PTA) and other welding associated techniques. In some embodiments, the exemplary friction surfacing method results in minimal contamination of the one coating layer 140, compared to other coating processes. In some embodiments, a dilution (not shown in figures) of the one coating layer 140 is less than 0.5 volume% of the one coating layer 140. In certain embodiments, the dilution is less than 0.1 volume % of the one coating layer 140.

As discussed herein, in one embodiment, the base 130 and the one coating layer 140 are part of the journal bearing 120. In another embodiment, the base 130 and the one coating layer 140 are part of the journal 110. The base 130 and the one coating layer 140 are applicable for both high and low temperature applications.

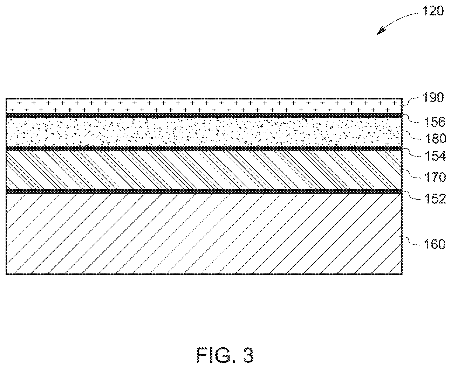

FIG. 3 is a schematic illustration of the journal bearing 120 in accordance with one exemplary embodiment. In the illustrated embodiment, the journal bearing 120 includes a backing plate 160 which provides rigidity to the journal bearing 120. The backing plate 160 may be formed of a material, such as, for example, steel, titanium, cobalt-based alloys, titanium-based alloys, nickel based alloys, or combinations thereof. In some embodiments, the backing plate may be formed of a base material that includes steel, titanium, or a combination thereof. In some embodiments, the backing plate 160 may be a journal bearing housing that may have a circular or semicircular shape to accommodate the journal 110 shown in FIG. 1.

In some embodiments, the backing plate 160 is provided with a coating layer 170. In some embodiments, the backing plate and the coating layer 170 have same material composition. The thickness of the coating layer 170 may be adjusted as required for particular applications. Another coating layer 180 may be disposed on the coating layer 170. In some embodiments, the coating layer 170 may not be used and the coating layer 180 may be disposed directly on the backing plate 160. The coating layer 180 may have a different material composition than the backing plate 160 or the coating layer 170. The coating layer 180 may aid in shock absorption of the shaft or bearing component and may further act as a back-up for a top-most layer. Further, another coating layer 190 may be provided on the coating layer 180.

With reference to FIGS. 1 and 3, in some embodiments where the backing plate 160 and the coating layer 170 have the same material composition, the base 130 illustrated in FIG. 1 would be equivalent to the backing plate 160 of FIG. 3, and the one layer of the at least one coating layer 140 would be equivalent to the coating layer 170. The heat-affected zone 152 of the backing plate 160 is equivalent to the heat-affected zone 150 of the base 130. In some embodiments, the backing plate 160 and the coating layer 170 may include a material composition having steel, titanium, cobalt-based alloys, titanium-based alloys, nickel based alloys, or combinations thereof. In some other embodiments, the backing plate 160 and the coating layer 170 may include a material composition that includes steel, titanium, or a combination thereof.

In some embodiments, the thickness of the coating layer 170 may be in a range from about 1 mm to about 3 mm. In some specific embodiments, the thickness of the coating layer 170 is in a range from about 1.5 mm to about 2.5 mm. In certain embodiments, the thickness of the coating layer 170 is about 2 mm.

Referring again to FIGS. 1 and 3, in some embodiments, a combination of the backing plate 160 and the coating layer 170 is equivalent to the base 130, the coating layer 180 is equivalent to the one layer of the at least one coating layer 140, and the heat-affected zone 154 is equivalent to the heat-affected zone 150. In some of these embodiments, the coating layer 170 includes a base material composition that includes steel, titanium, cobalt-based alloys, titanium-based alloys, nickel based alloys, or combinations thereof. In some specific embodiments, the coating layer 170 includes a base material composition that includes steel, titanium, or a combination thereof. In such embodiments, the coating layer 180 may include bronze or leaded bronze composition. In some embodiments, the coating layer 180 may include a coating material composition that includes copper, zinc, nickel, lead, antimony, aluminum, tin, molybdenum disulfide, or any combinations thereof. In certain other embodiments, the coating material composition includes cobalt-based wear resistant alloys, such as for example Stellites™, nickel-based super alloys, such as for example, Inconel™, chromium carbide, nickel, or combinations thereof. In some other embodiments, an amount of tin present in the coating material composition of the layer 180 is limited to less than 15 volume% of the coating layer 180. In some embodiments, the coating layer 180 includes a gradient in the coating material composition along a direction perpendicular to the heat-affected zone 154.

In some embodiments, the thickness of the coating layer 180 may be in a range from about 0.1 mm to about 1 mm. In some specific embodiments, the thickness of the coating layer 180 is in a range from about 0.3 mm to about 0.8 mm. In certain embodiments, the thickness of the coating layer 180 is about 0.6 mm.

In some embodiments, the coating layer 180 is equivalent to the base 130, the coating layer 190 is equivalent to the coating layer 140, and the heat-affected zone 156 is equivalent to the heat-affected zone 150 of the base 130. In some specific embodiments, the coating layer 190 includes a softer material composition compared to the coating layer 180. In certain embodiments, the coating layer 190 is referred to as an "overlay coating" and may have lesser thickness compared to the coating layer 180. In one embodiment, the coating layer 190 may include an aluminum-based or copper-based alloy material. In certain embodiments, the coating layer 190 includes an aluminum-based material, such as, for example an aluminum-tin-copper alloy. In some embodiments, an amount of tin present in the coating material composition of the coating layer 190 is limited to less than 15 volume% of the coating layer 190.

In such embodiments, where the base 130 is equivalent to the coating layer 180, the coating layer 180 may include a base material composition that includes copper, zinc, nickel, lead, antimony, aluminum, tin, molybdenum disulfide, or combinations thereof. The coating layer 190 may include a coating material composition that includes aluminum, tin, molybdenum disulfide, tungsten disulfide, graphite, a polymer, or a combination thereof. The overlay coating layer 190 may include for example, a polymer such as polytetrafluoroethylene (PTFE) having low friction characteristics. In other embodiments, other polymer materials such as ultrahigh molecular weight polyethylene (UHMWPE), polyether ether ketone (PEEK), nylon, polyimides such as Vespel™, or any combinations thereof may also be used. In some embodiments, the polymers disclosed hereinabove may be used along with suitable reinforcements.

In some embodiments, the base 130 is equivalent to a combination of the coating layer 180 and the backing plate 160, without an intervening coating layer 170.

In some embodiments, the overlay coating layer 190 may have a thickness in a range from about 5 micrometers to about 200 micrometers. In some specific embodiments, the thickness of the coating layer 190 is in a range from about 10 micrometers to about 100 micrometers. In certain embodiments, the thickness of the coating layer 190 is in a range from 25 microns to about 75 microns. In some other embodiments, the thickness of the coating layer 190 is greater than 50 microns and less than 200 microns. Further, in some embodiments, the thickness of the coating layer 190 is greater than 75 microns and less than 200 microns.

In some embodiments of the invention, the journal bearing 120 includes the coating layers 170, 180, 190. In such embodiments, the coating layer 170 acts as the base. As disclosed, in some specific embodiments, the coating layer 170 includes a base material composition having steel, titanium, or a combination thereof. The coating layer 180 (also referred to as a first coating layer) is bonded to the coating layer 170 and includes a first coating material composition having copper, zinc, lead, tin, antimony, or any combinations thereof. In some embodiments, the coating layer 180 includes a gradient of copper, zinc, lead, or antimony along a direction perpendicular to the coating layer 170. In certain embodiments, the thickness of the coating layer 180 is greater than 50 micrometers. In certain specific embodiments, the thickness of the coating layer 180 is greater than 200 micrometers. The coating layer 190 (also referred to as a second coating layer) disposed on the coating layer 180, may include aluminum, tin, molybdenum disulfide, tungsten disulfide, graphite, a polymer, or any combinations thereof. The density of the coating layer 180 and the coating layer 190 may be greater than 98% of the theoretical densities of the respective layers. A dilution of the coating layers 180, 190 may be less than 5 volume% of the respective layers. In some embodiments, a thickness of the coating layer 190 may be in a range from about 25 micrometers to about 100 micrometers.

In some embodiments, the overlay coating layer 190 is configured to increase the conformability of the journal bearing 120. The conformability of the journal bearing 120 may be particularly beneficial in applications that are prone to misalignment of the journal 110 relative to the journal bearing 120 causing an effect commonly referred to as "edge loading." In addition, conformability of the journal bearing 120 facilitates to compensate for any imperfections of the journal 110 that may reduce the useful life of the journal bearing 120.

In some high temperature applications, the backing plate 160 or the coating layers 170 (if present), 180 (illustrated in FIG. 3) may be desirably composed of metals such as, for example, nickel-based steel, beryllium-copper alloy, beryllium-bronze alloy, thermoplastic materials, or any combinations thereof, which have properties such as fatigue-resistance, good spring properties, and strong mechanical strength. In some specific embodiments, the overlaying coating layer 190 may be composed of multilayer composite material which provides good internal damping. For example, in a high temperature journal bearing application operating at a temperature greater than 1000 °C, the overlaying coating layers 190 may be made of super alloys such as, for example, Ni-based metals, Rene or Inconel™ sheets, or the like. In some embodiments, for the journal bearing 120, the overlaying coating layer 190 may include a softer material provided over a base which includes a hard material.

In some embodiments, the coating layers 170, 180, 190 may further be subjected to other post-coating treatments, such as, for example, machining to provide exact thickness, surface texture, or a combination thereof. For example, in some embodiments, the coating layers may have a higher thickness than desired and may be further ground to reduce thickness to the desired level. In some other embodiments, a rough surface may be obtained from the friction surfacing methods and then may be further subjected to polishing, and /or lapping to obtain a desired surface finish. In certain embodiments, the coating layer 190 may be deposited by a friction surfacing method. In such embodiments, the coating layer 190 may have a thickness greater than 100 micrometers and may be then machined to reduce the thickness to less than 100 micrometers.

Even though the backing plate 160 and the coatings layers 170, 180, 190 are illustrated as planar surfaces, in some embodiments; the backing plate 160 may have other shapes. A coating surface of the backing plate 160 may have different shapes, such as, for example, an outer arcuate convex surface (not shown) and an inner arcuate concave surface (not shown). The coating layers 170, 180, 190 described herein may be applied to the concave surfaces of the backing plate 160.

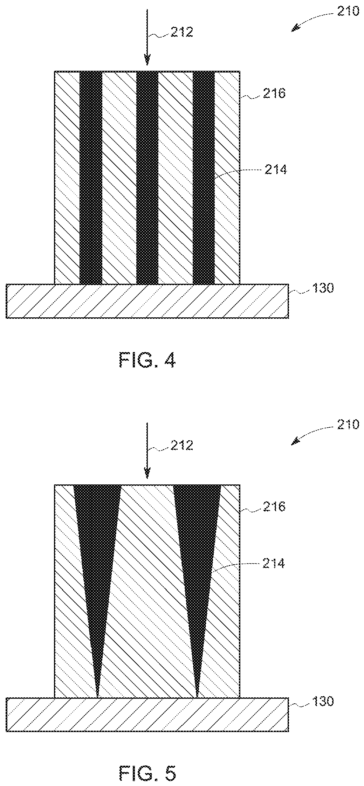

FIG. 4 shows a schematic sectional view of the pin tool 210 used to provide at least one coating layer 140 (illustrated in FIG. 1) on the base 130 in accordance with another exemplary embodiment. In the illustrated embodiment, the pin tool 210 is designed to include two or more different materials 214, 216 that are disposed during the coating process. The materials 214 and 216 may be any desired combinations of the materials, such as, for example, soft and hard materials; hard particles in soft or hard materials; solid lubricants in soft or hard materials. An example of a soft material may include copper. An example of a hard material may include Stellites™. Non-limiting examples of the hard particles may include chromium carbides, chromium borides, tungsten carbides, Stellites™ powders. Non-limiting examples of the solid lubricants may include molybdenum disulfide, tungsten disulfide. A desired mixture of the material 214, 216 is deposited on predefined locations of the base 130 by rotating the pin tool 210. The rotation of the pin tool 210 may also be controlled to deposit different amounts of the materials 214, 216 depending on the application. While the illustrated embodiment shows only two materials 214, 216 to be deposited as a mixture, one skilled in the art would be able to envision additional materials depending on the application.

FIG. 5 is a schematic cross sectional view of the pin tool 210 in accordance with another exemplary embodiment. The pin tool 210 is configured to form the one layer 140 (illustrated in FIG. 1) having a graded compositional variation along a direction perpendicular to the base 130. Specifically, amount of the materials 214, 216 is graded in the pin tool 210 in a direction along the axis 212 that is perpendicular to the base 130 on which the coating is to be deposited. This may result in a gradient in composition of the one coating layer 140 that is deposited from the pin tool 210. Thus, in some embodiments, the coating material composition of the one coating layer 140 (shown in FIG. 1) includes a gradient along the direction perpendicular to the base 130. In certain embodiments, the pin tool 210 includes a mixture of copper, zinc, nickel, lead, antimony, aluminum, tin, molybdenum disulfide, or any combinations thereof.

In some embodiments, the coating layer 190 includes a graded aluminum-based alloy. In some other embodiments, the coating layer 190 includes a combination of a polymer with a solid lubrication material, such as for example, molybdenum disulfide and tungsten disulfide. In certain other embodiments, the solid lubricant materials may be graded along the thickness of the coating layer 190. In some embodiments, the coating layer 190 includes a double layer with an aluminum-based layer (including aluminum or aluminum-based alloy) and a polymer layer including a solid lubricant over the aluminum-based layer.

In conventional journal bearings, coating layers are mechanically inserted into the housing, in the form of a bushing. Mechanical joints are used between the housing and the coating layers, which may hinder heat dissipation leading to increased temperature build up at certain parts of the bearing. Certain common solid lubricants, such as, for example, tin and some polymers, used in low temperature applications, have low melting point, that may demand operation of the bearing at low temperatures. Embodiments of the present invention disclose an exemplary friction surface coating process, which facilitates to eliminate use of mechanical joints and thereby enabling higher heat transfer between parts and higher operating temperatures. Further, there can be a significant equipment and material cost benefit in using friction-surfacing methods, because there is no need to use expensive arcing or melting equipment, and further, loss of the coating material is very minimal.

Further, in conventional journal bearings, it is common for contaminants or debris to come in contact with the journal bearing. There are high chances of debris, such as for example, metal or soot deposition in-between the housing and the bushings of the journal bearings. In accordance with the embodiments of the present invention, the exemplary friction surface coating prevents formation of such gaps, thereby preventing deposition of debris. Furthermore, energy consumption during coating process employing a friction surfacing technique, is less, (for example, less than 10 %) compared to conventional coating methods.

Another aspect of the present invention is directed to a coating for a system having an assembly comprising a valve. Valve systems may be used in different types of engines such as, for example, internal combustion engines and reciprocating engines. Failure of valves and valve seats can affect operation of the engines. Valve and valve seat damage may occur due to wear failure, valve face recession, fatigue failure, thermal fatigue, erosion/corrosion of valves and valve seats, overheating of valves and valve seats, and carbon deposits on valves and valve seats.

Intake (inlet) valves or exhaust valves of internal combustion engines engage with corresponding valve seats, when the valves are closed during a portion of the engine operating cycle. An improper positioning, orientation, or formation of the valve and valve seat combination due to manufacture defects or operational wear may adversely affect engine compression ratio and thereby affect the engine efficiency, performance (horsepower), exhaust emissions, and engine life.

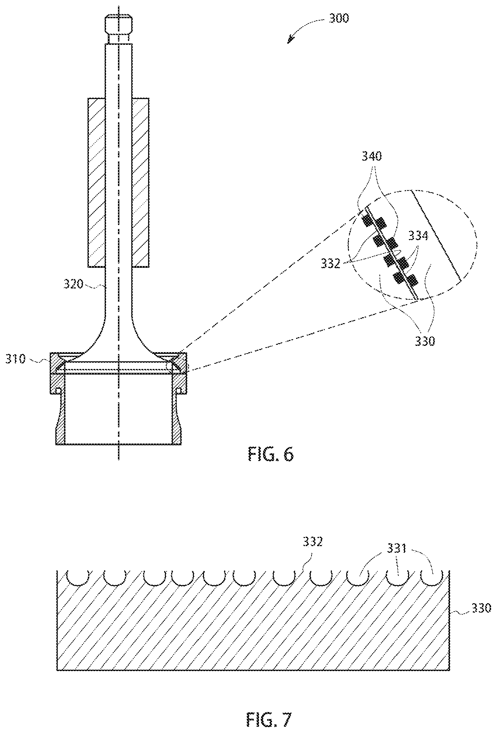

FIG. 6 is a schematic sectional view of a system 300 in accordance with some embodiments of the present invention. The system 300 includes a valve seat 310 and a valve 320 coupled to the valve seat 310. As used herein, the phrase "valve coupled to the valve seat" means that the valve 320 and the valve seat 310 operate as a pair during the operation of the system 300 and does not necessarily indicate any physical bonding between the valve 320 and the valve seat 310. The exemplary valve 320 and valve seat 310 may be suitable for any combustion applications that include, but not limited to, internal combustion engines and reciprocating engines. At least one of the valve seat 310 and the valve 320 includes a base 330 that includes a plurality of dimples 331 on a surface 332. In some embodiments, a coating 340 may be provided on each of some dimples 334 among the plurality of dimples 331. As used herein, the term "coating" on each dimple 334 refers to the coating material in the dimple 334. In some embodiments, the coating 340 may be in the form of a layer on the entire surface 332 of the base 330. In some specific embodiments, the coating 340 may be provided on each dimple 331.

Each dimple 331 has a depth greater than 50 micrometers. A density of the coating 340 is greater than 98 % of a theoretical density of the coating 340. As used herein, the term "theoretical density of the coating" is defined as the mass per volume of the material of the coating 340, excluding all the pores in the coating. A dilution of the coating 340 is less than 0.5 volume % of the coating 340. As used herein, a "dilution of the coating 340" is referred to as an inclusion of any impurity, such as, for example, any other material other than a coating material of the coating 340. Some embodiments of the present invention are related to a method of providing the coating 340 on each dimple 334. In some embodiments, the coating 340 is formed using a friction surfacing method.

FIG. 7 is a schematic cross-sectional view of the base 330 according to an embodiment of FIG. 6. As discussed previously, the base 330 includes the plurality of dimples 331 formed on the surface 332. In some embodiments, a coating 340 may be provided on each of some dimples 334 among the plurality of dimples 331. In some specific embodiments, the coating 340 may be provided on each of the plurality of dimples 331.

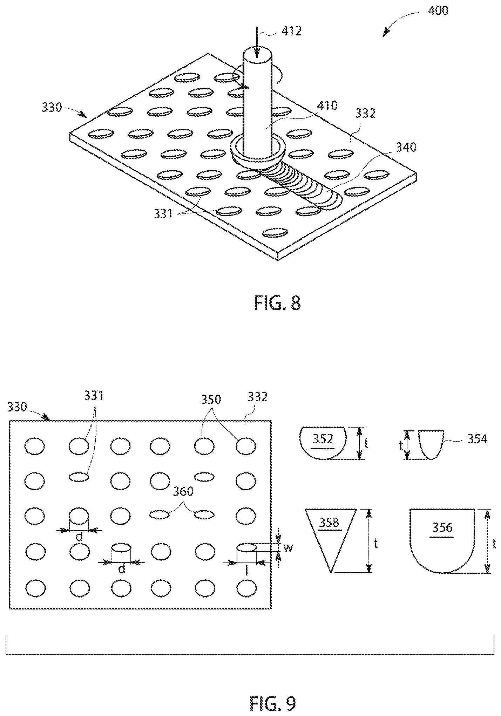

Referring to FIG. 8, a perspective view of a friction surfacing apparatus 400 is illustrated according to some embodiments of the present invention. The friction surfacing apparatus 400 includes a movable pin tool 410. In the illustrated embodiment, the pin tool 410 has a substantially cylindrical, rod-like shape. The pin tool 410 may be a solid rod or may be partially or entirely hollow. The diameter of the pin toll 410 may vary depending on the application. In some embodiments, the diameter of the pin tool 410 is in a range from about 0.50 mm to about 50 mm.

The pin tool 410 is coupled to a drive mechanism (not shown), such as, for example, a spindle. The drive mechanism is operable for rotating the pin tool 410 about an axis 412. Typically, the pin tool 410 is rotated at a speed in a range from about 100 revolutions per minute (rpm) to about 10,000 rpm during the friction surfacing process. Rotation of the pin tool 410 in conjunction with a forging load transmitted between the pin tool 410 and the surface 332 of the base 330, generates a frictional heat and thermo-mechanical work. As a result, the pin tool 410 is subjected to frictional heat at a temperature below tool melting point, causing plasticization and deposition of material of the pin tool 410 on each dimple 334 formed on the surface 332 of the base 330. The amount of material deposited by the pin tool 410 may be dependent on the rotational speed of the pin tool 410, the feed rate of the pin tool 410, and the traverse speed of the friction surfacing apparatus 400. The pin tool 410 may be made of a material that is same as, similar to, or dissimilar from a material of the base 330. For example, if the base 330 is made of a metal or metal alloy, the pin tool 410 can be made of the same metal or metal alloy, or similar metal or metal alloy, or dissimilar material that provides a desired characteristic when the pin tool material is deposited on at least some dimples 334 on the surface 332 of the base 330.

During operation, the pin tool 410 is fed at a desired feed rate. The pin tool 410 is rotated and traversed along the surface 332 of the base 330. In some embodiments, the feed rate may in a range from about 2 millimeters per minute (mm/minute) to about 100 mm/minute. It should be noted that the feed rate of the pin tool 410 may vary based upon pin tool material(s) and the material(s) of the base 330.

Further, during operation, a temperature of a tip of the pin tool 410 is maintained at a range in which the pin tool material is substantially plastic. For example, the temperature of the tip of the pin tool 410 may be maintained in a range from about 800° C to about 1000° C for copper and copper alloys; from about 875° C to about 1075° C for different steels and nickel alloys, and from about 1100° C to about 1300° C for titanium and titanium alloys.

As disclosed previously, the base 330 includes a plurality of dimples 331 on the surface 332. As the pin tool 410 is traversed along the base 330, the plasticized metal, metal alloy, or other material of the pin tool 410 is deposited to forming a coating of the pin tool material on the surface 332 of the base 330. The pin tool material is coated on some dimples 334 of the plurality of dimples 331. The pin tool 410 may be traversed along the surface 332 of the base 330 at a rate that is sufficient to deposit a desired amount of material on each dimple 334. For example, in some embodiments, the pin tool 410 may traverse along the surface 332 of the base 330 at a rate in a range from about 2 mm/minute to about 400 mm/minute.

A continuous forging action on the pin tool 410 enhances the mechanical bond between the deposited pin tool material and the base 330, refines the microstructure of deposited pin tool 410 material, and minimizes any flash during operation. The localized plastic deformation of the pin tool 410 results in a substantially crystalline microstructure and low porosity. The pin tool 410 may be subjected to sequential passes to form a monolithic or graded coating. In some other embodiments, linear, angular and/or contoured coating may be formed.

In accordance with the embodiments of the present invention, the friction surfacing apparatus 400 may be used to deposit similar or dissimilar material such as titanium alloys, nickel-based alloys, iron based alloys (including steel), copper-based alloys, aluminum-based alloys, cobalt based alloys, and the like on a wide variety of base materials.

The exemplary friction surfacing method described herein provides benefits including: 1) minimal solidification cracking, porosity, or segregation; 2) a fine, hot-worked metallurgical structure; 3) mechanical properties of the deposited or bonded zone material that are equivalent to or better than the base material; 4) lower heat input to the base material to reduce residual stresses and distortion which does not adversely affect the structure and properties of the base material and 5) ability to tailor the local chemistry, metallurgical structure, and mechanical properties of specific areas or coating of the components.

FIG. 9 illustrates a schematic representation of the base 330 having the plurality of dimples 331 formed on the surface 332 according to an embodiment of the present invention. The dimples 331 are recesses formed on the surface 332 of the base 330. The shape and size of the dimples 331 may vary depending on the application. In some embodiments, shape of each dimple 331 may be a hemi-sphere, parabola, cylindrical, conical, square, rectangle, or any combinations thereof. In some embodiments, the dimples 331 have a spherical cross-sectional area 350. Non-limiting examples of dimples 334 may include hemispherical dimples 352, parabola shaped dimples 354, cylindrical dimples 356, and conical dimples 358. In some embodiments, some dimples 334 may have an oval cross-sectional area 360.

In some embodiments, a depth or thickness "t" of each dimple 331 is greater than 50 micro meters. In some other embodiments, the depth "t" of each dimple 331 is greater than 100 micrometers. In certain embodiments, the depth "t" is greater than 500 micrometers. In certain other embodiments, the depth "t" is in a range from about 100 micrometers to about 2 millimeters. In some other embodiments, the depth "t" is in a range from about 400 micrometers to about 1.5 millimeters.

In some embodiments, a diameter "d" of each dimple 334 is greater than 50 micro meters. In some other embodiments, the diameter "d" of each dimple 334 is greater than 100 micrometers. In certain embodiments, the diameter "d" is greater than 500 micrometers. In certain other embodiments, the diameter "d" is in a range from about 50 micrometers to about 4 millimeters. In some embodiments, the diameter "d" is in a range from about 100 micrometers to about 2 millimeters. In some embodiments, a depth "t" to diameter "d" ratio of each dimple 334 is in a range from about 0.1 to about 100. In some specific embodiments, the depth "t" to diameter "d" ratio of each dimple is in a range from about 0.5 to about 10.

In some embodiments, an aspect ratio of the cross-section of the oval dimple 360 is greater than 1. As used herein, an aspect ratio of the cross-section of the oval dimple 360 is defined as a length "I" to width "w" ratio of the oval dimple 360. In some embodiments, the aspect ratio of the oval dimple 360 is greater than 10. In certain embodiments, the aspect ratio of the oval dimple 360 is greater than 100.

In some embodiments, the plurality of dimples 331 has a spatial density greater than 10 % of area of the surface 332 of the base 330. The term "spatial density" as used herein refers to a ratio of an area occupied by the plurality of dimples 331 to the total area of the surface 332. In some embodiments, the spatial density is in a range from about 10 % to 20 % of area of the surface 332.

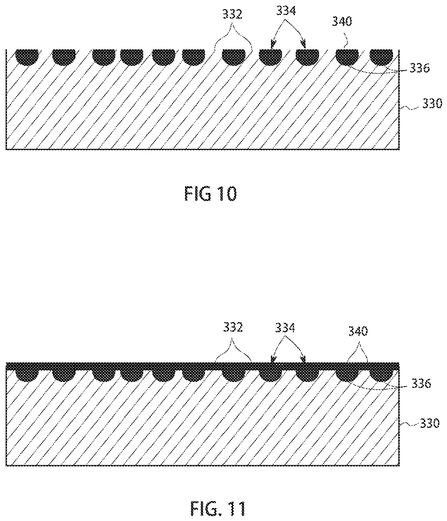

FIG. 10 is a schematic cross-sectional view of the base 330 according to an embodiment of the present invention. In the illustrated embodiment, each dimple 334 is provided with the coating 340. In some embodiments, each dimple 334 is substantially filled with the coating 340. In the illustrated embodiment, the coating 340 is confined only to the volume of each dimple 334. In other words, the coating 340 is not provided to the areas of the surface 332 that are not occupied by the dimples.

FIG. 11 is a schematic cross-sectional view of the base 330 according to another embodiment of the present invention. In the illustrated embodiment, each dimple 334 is provided with the coating 340. Additionally, the coating 340 is also provided to the areas of the surface 332 that are not occupied by the dimples.

In some embodiments, a density of the coating 340 is greater than 98 % of a theoretical density of the coating 340. As used herein, the term "theoretical density" defined as the mass per volume of the material of the coating 340, excluding all the pores. The theoretical density may be calculated from the crystallographic data of the material composition of the coating 340.

In the exemplary friction surfacing method disclosed herein, a mechanical mixing or stirring between the base material and the coating material is substantially less compared to some other coating methods, such as, for example, sputtering. The exemplary friction surfacing method results in minimal contamination of the coating 340 compared to other coating processes. In some embodiments, a dilution of the coating 340 is less than 0.5 volume% of the coating 340. In certain embodiments, the dilution is less than about 0.1 volume % of the coating 340.

With reference to both FIGS. 10 and 11, the base 330 includes a heat-affected zone 336 bonded to the coating 340. The heat-affected zone 336 has a thickness less than 5 micrometers. The heat-affected zone 336 is defined as the portion of the base 330 that is affected by the process of providing the coating 340. When a friction surfacing method is used to provide the coating 340 on the base 330, the heat-affected zone 336 is a top portion of the base 330 that is affected while providing the coating 340. A portion or zone 336 of the base 330 is said to be "heat-affected" if any physical or chemical characteristics of the portion/zone is changed to an extent greater than 5% compared to a remaining portion of the base 330 which is not affected by the coating process. The physical characteristics may include, for example, the structure, microstructure, and density of the heat affected zone. The chemical characteristics may include, for example, the material composition or the crystal structure of the heat affected zone 336.

In some embodiments, the heat-affected zone 336 is a very thin layer of the base 330. Such a thin heat-affected zone 336 may be particularly advantageous compared to a thicker heat-affected zone because the thin heat-affected zone may include weak zones of coarse microstructure and low hardness where failure may be initiated. Therefore, in some embodiments, a well-adhering and effective coating 340 is provided on the base 330 without substantially changing the mechanical characteristics of the base 330 during the coating process. Therefore, a desired base may be designed before-hand without the need to accommodate any substantial changes during the process of coating. In some specific embodiments, a thickness of the heat-affected zone 336 of the base 330 is less than about 5 micrometers. In some embodiments, the thickness of the heat-affected zone 336 is less than about 2 micrometers.

In the embodiment of FIG. 10, the coating 340 is confined to the volume of the each dimple 334, the heat-affected zone 336 of base 330 is confined to the interface of the coating 340 that is disposed on each dimples 334. In the embodiment of FIG. 11, the coating 340 is disposed on the entire surface 332. In such an embodiment, the heat-affected zone 336 of the base 330 extends along the interface of the entire surface 332 with the coating 340.

As disclosed earlier, a function of the coating 340 is to provide lubrication between valves and valve seats, and hence reduce friction. Accordingly, in some embodiments, the coating 340 includes a soft material. As used herein, the term "soft material" refers to a material that either has reduced inherent hardness as compared to the material of the base 330 or may become softer than the materials of the base at the operating temperature of the valves and valve seats. Incorporation of a soft, high thermal conductivity material in the coating 340 further enhances heat-transfer between valves and valve seats. Non-limiting examples of the soft material include copper, copper alloys, silver, silver alloys, aluminum alloys.

In some embodiments, the coating 340 may include a solid-lubricant material and the soft material. As used herein, the term "solid-lubricant material" refers to a material that is in a solid state at an operating temperature and is capable of providing a lubricating action on surfaces where the solid-lubricant material is applied. A solid-lubricant material may be particularly advantageous compared to a traditionally used liquid-lubricant material because the disposal and maintenance of the solid-lubricant material is much easier compared to the liquid-lubricant material. Non-limiting examples of the solid-lubricant material include molybdenum disulfide, tungsten disulfide, graphite, calcium fluoride, barium fluoride, hexagonal boron nitride, or any combinations thereof. In some specific embodiments, the solid-lubricant material includes molybdenum disulfide, tungsten disulfide, or a combination of both.

In some specific embodiments, the coating 340 may include a gradient of the soft material in the coating along a direction that is perpendicular to the base. For example, in certain embodiments, an amount of soft material may decrease along a direction from the base 330 to a top surface of the coating 340. In some other embodiments, the amount of soft material in the coating 340 may increase along the thickness (not shown) of the coating 340 from the base 330. A gradient of the soft material and the solid-lubricant material may be particularly advantageous to provide specific lubrication at specific locations along the thickness of the coating 340. In some specific embodiments, the coating 340 including a combination of the soft material and solid-lubricant material is provided on a base that includes a hard material such as, for example, steel, nickel based super alloys such as, for example, Inconel™ and Nimonic™, cobalt-based wear resistant alloys, such as, for example, Stellite™. In certain embodiments, the coating 340 including the soft material and the solid lubricating material may be confined to the volume of the dimples formed on the surface 332 of the base, as shown in FIG. 10. This may be particularly advantageous as the surface 332 after coating, includes the soft material, the solid-lubricant material, and the hard material, thus providing both lubrication and wear resistance.

In some embodiments, the coating 340 may include a hard material and the soft material. As used herein, the term "hard material" of the coating 340 refers to a material that has enhanced inherent hardness compared to the material of the base 330. The hard material of the coating 340 enhances wear resistance of the coating 340. Non-limiting examples of the hard material of the coating 340 include alumina, chromium carbide, cubic boron nitride, or any combinations thereof. In some specific embodiments, the hard material of the coating 340 includes alumina, chromium carbide, or a combination of both.

In some specific embodiments, the coating 340 may include a gradient of the soft material along a direction that is perpendicular to the base 330. For example, in certain embodiments, an amount of the soft material may decrease along a direction from the base 330 to a top surface of the coating 340. In some other embodiments, the amount of soft material in the coating 340 may increase along the thickness of the coating 340 from the base 330.

In some embodiments, the coating 340 may include a soft material, a hard material, and a solid-lubricant material. In some further embodiments, the coating 340 may include a gradient of the soft material, solid-lubricant material, and/or hard material.

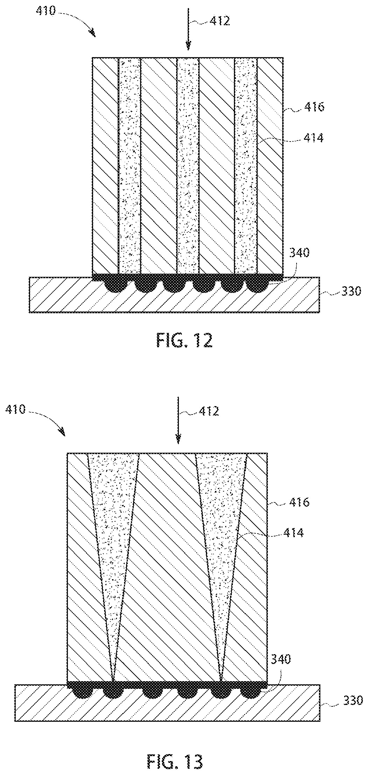

FIG. 12 shows a schematic sectional view of the pin tool 410 used to provide the coating 340 on the base 330 in accordance with an embodiment of the present invention. In the illustrated embodiment, the pin tool 410 includes two different materials 414, 416 that are disposed during the coating process. The materials 414, 416 may be selected such that the material 414 may be a first material and the material 416 may be a solid-lubricant material, a second material, or combination of the solid-lubricant material and the second material. Non-limiting examples include a soft material and a solid-lubricant material, or a soft material and a hard material, or a soft material, a hard material, and a solid-lubricant material. An exemplary soft material includes copper. An exemplary hard material may include alumina. Exemplary solid-lubricant materials include molybdenum disulfide and tungsten disulfide. A desired mixture of the materials 414, 416 is deposited on predefined locations of the base 330 by rotating the pin tool 410. The rotation of the pin tool 410 may be controlled to deposit different amounts of the materials 414, 416 depending on the application. While the illustrated embodiment shows only two materials 414, 416 to be deposited as a mixture, one skilled in the art would be able to envision additional materials depending on the application.

FIG. 13 is a schematic cross sectional view of the pin tool 410 in accordance with another exemplary embodiment. The pin tool 410 is configured to form the coating 340 having a graded compositional variation along a direction perpendicular to the base 330. Specifically, amount of the materials 414, 416 are graded in the pin tool 410 in a direction along the axis 412 perpendicular to the base 330 on which the coating 340 is to be deposited. As a result, the formed coating 340 includes a gradient in the amount of the materials 414, 416 deposited on the base 330, along the direction perpendicular to the base 330. In certain embodiments, the pin tool 410 includes a mixture of copper and alumina. In some embodiments, the pin tool 410 includes a mixture of copper and tungsten disulfide. In certain other embodiments, the pin tool 410 includes a mixture of copper, alumina, and molybdenum disulfide.

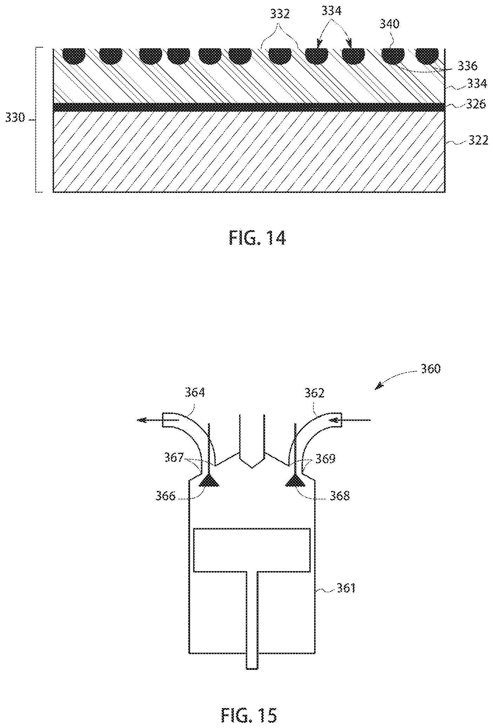

FIG. 14 is a schematic cross-sectional view of the base 330 and the coating 340 according to an embodiment of the present invention. The base 330 includes a base substrate 322 and a base layer 324 formed on the base substrate 322. In some embodiments, the base substrate 322 is formed on the base layer 324, using a friction surfacing process. The base layer 324 includes the surface 332 having the plurality of dimples 334. In some embodiments, the base substrate 322 and the base layer 324 have the same material composition. In some other embodiments, the base substrate 322 and the base layer 324 have different material composition. In certain embodiments, the base layer 324 may include a hard material. Non-limiting examples of the hard material include ceramic materials, composite materials, Stellite 12™, Stellite 6™, Triballoy 400™, Nimonic 80A™, Winsert™, Pyromet 31™, or any combinations thereof. In some embodiments, the base layer 324 may have a combination of hard materials, and the method described in FIG. 13 and FIG. 14 may be used to coat the base layer 324 with different combination of materials. The thickness of the base layer 324 may vary depending on the applications. The coating 340 is provided on the base layer 324.

In some embodiments, the thickness of the base layer 324 may be greater than 100 micrometers. In some other embodiments, the thickness of the base layer 324 is in a range from about 0.2 mm to about 10 mm. In some other embodiments, the thickness of the base layer 324 is in a range from about 0.5 mm to about 5 mm. In certain embodiments, the thickness of the base layer 324 is in a range from about 2 mm to about 4 mm. The base layer 324 may have a high density and low dilution. In some embodiments, a density of the base layer 324 is greater than 98 percent of a theoretical density of the base layer 324 and a dilution of the base layer 324 is less than 0.5 volume % of the base layer 324.

In the illustrated embodiment, the base substrate 322 includes a heat-affected zone 326 at the interface with the base layer 324. In some embodiments, a thickness of the heat affected zone 326 is less than 0.5 micrometer.

In some embodiments, the coating 340 includes a combination of the soft material and a solid-lubricant. In certain embodiments, the coating 340 may be confined to the volume of the dimples 334 formed on the surface 332 of the base layer 324.

Various methods may be used to form the dimples formed on the surface 332, such as, for example, lithographic techniques, machining, embossing, chemical etching, micro milling, shot blasting, electrical discharging, or ball end milling. In certain embodiments, a laser texturing method is used to create dimples on the base 330 layer 324. A laser surface texturing technique may be particularly advantageous over other methods because laser texturing method is a fast and efficient process and may be used to form dimples of different geometries. For the laser texturing method, a pulsed laser may be used, such as, for example, an excimer laser. Surface of the sample may be cleaned before the laser etching step, using different methods. Further subsequent etching steps, such as, for example, chemical etching, may be carried out after the last etching step. Etched surfaces may be polished and cleaned using ultra sonication. In some embodiments, the dimples are cleaned by different methods, such as, for example, acid cleaning, for performing friction surfacing coating.

In some embodiments, the surface 332 of the base 330 and/or the coating 340 may be further subjected to post-coating treatments, such as, for example, machining to provide exact thickness, surface texture, surface material combination, or a combination thereof. For example, in some embodiments, the coating 340 may be formed on the dimples 334 and further on the portions of the surface 332 that are not occupied by the dimples. It may be desirable to confine the coating 340 to the volume of the dimples 334. In such embodiments, machining may be used to remove top portion of the coating 340 and also to remove coating 340 from portions of the surface 332 that are not occupied by the dimples.

FIG. 15 is a schematic view of an internal combustion engine 360 according to an embodiment of the present invention. The engine include an intake valve 368 coupled to a valve seat 369 and an exhaust valve 366 coupled to a valve seat 367. In some embodiments, the exhaust valve 366 and the valve seat 367 may operate at a higher temperature compared to the inlet valve 368 and the valve seat 369 of the combustion engine 360. For example, the exhaust valve 366 and the exhaust valve seat 367 may operate at a temperature in a range from about 350°C to about 700°C whereas the inlet valve 368 and the inlet valve seat 369 may operate at a temperature in a range from about 150°C to about 300°C.

The exemplary friction surfacing method disclosed herein may be used to coat any of the exhaust valve 366, inlet valve 368, and the valve seats 367, 369. The base of the coating may include any metal or alloy that is used to manufacture the exhaust valve 366, the inlet valve 368, and the valve seats 367, 369. In some embodiments, material of the base may include steel, nickel, a cobalt-based wear resistant alloy, a nickel-based alloy, an iron-based alloy, or any combinations thereof. Non-limiting examples include steel, nickel based super alloys such as, for example, Inconel™ and Nimonic™, cobalt-based wear resistant alloys, such as, for example, Stellite™. The material of coating may vary based on the temperature of operation of the combustion engine 360. For example, aluminum or aluminum alloys may be used as a coating material for the inlet valve seat 369 and inlet valve 368 of the combustion engine 360 because the temperature of operation of the inlet valve 368 is below the melting point of aluminum. However, aluminum and some low melting point aluminum alloys may not be used as the coating material for the exhaust valve seat 367 and the exhaust valve 366 because the temperature of operation of the exhaust valve 366 may be equal to or greater than the melting point of aluminum.

Incorporation of a soft, high thermal conductivity material in the coating of valves 366, 368, and valve seats 367, 369 may further enhance heat-transfer between the valves and valve seats. For example, a thermal conductivity of copper is known to be more than 20 times the thermal conductivity of a Stellite™ material. Therefore, incorporation of copper coating on the dimples of the Stellite™ base may facilitate effective transfer of heat from the combustion gases to a cooled surface of the valve seats 367, 369 through the coated surfaces of valves 366, 368 and valve seats 367, 369.

In conventional valve systems, oil lubrication is used between valve and valve seats. However, such techniques may not provide desired lubrication and wear resistance. Embodiments of the present invention disclose an exemplary friction surface coating process which enables higher lubrication, wear resistance, heat-transfer between parts, and higher operating temperatures. Further, equipment and material costs are reduced by using an exemplary friction-surfacing method, because there is no need to use expensive arcing or melting equipment. As a result, loss of the coating material is minimized.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method comprising:
disposing a coating on a base of an assembly using a friction surfacing process, wherein the coating has a density greater than 98 percent of a theoretical density of the coating and a dilution less than 0.5 volume % of the coating.

2. The method of claim 1, wherein the assembly is a journal bearing and a shaft, disposing a coating on a base comprises forming one layer of at least one coating layer having a coating thickness greater than 50 micrometers, density greater than about 98 percent of a theoretical density of the one layer, and a dilution less than 0.5 volume % of the one layer and the base comprises a heat-affected zone having a thickness less than 5 micrometers, bonded to the one layer of the at least one coating layer.

3. The method of claim 2, wherein forming the one layer of the at least one coating layer comprises forging and traversing a rotating cylinder on the base, wherein the rotating cylinder comprises a coating material composition of the one layer.

4. The method of claim 3, wherein forming the one layer of the at least one coating layer comprises forming a gradient in the coating material composition of the one layer, along a direction perpendicular to the base, wherein the rotating cylinder comprises copper, zinc, nickel, lead, antimony, aluminum, tin, molybdenum disulfide, tungsten disulfide, graphite, a polymer or any combinations thereof.

5. The method of claim 1, further comprising machining the formed one layer of the at least one coating layer for altering the coating thickness, a surface texture, or a combination thereof of the one layer.

6. The method of claim 1, wherein the assembly is a valve and valve seat, the coating is disposed on each of at least some dimples of a plurality of dimples formed on a surface of the base, wherein each dimple has a depth greater than 50 micrometers.

7. The method of claim 6, wherein disposing the coating comprises forging and traversing a rotating cylinder on the base, wherein the rotating cylinder comprises a coating material of the coating.

## Patentansprüche

1. Verfahren umfassend:
Auftragen einer Beschichtung auf einer Baugruppe als Basis durch Anwendung eines Auftrag-Reibschweißverfahrens, wobei die Beschichtung eine Dichte von mehr als 98 Prozent der theoretischen Dichte der Beschichtung und eine Verdünnung von kleiner als 0.5 Volumen-% der Beschichtung aufweist.

2. Verfahren nach Anspruch 1, wobei die Baugruppe ein Gleitlager und eine Welle ist, wobei das Auftragen der Beschichtung auf einer Basis das Bilden einer Schicht aus wenigstens eine Beschichtungsschicht mit einer dicke größer 50 Mikrometer, einer Dichte von mehr 98 Prozent einer theoretischen Dichte der Schicht und einer Verdünnung kleiner als 0.5 Volumen-% umfasst, und dass die Basis eine wärmebeeinflusste Zone mit einer Dicke kleiner als 5 Mikrometer aufweist, wobei die wärmebeeinflusste Zone mit der wenigstens einen Beschichtungsschicht verbunden ist.

3. Verfahren nach Anspruch 2, wobei das Bilden der Schicht der wenigstens einen Beschichtungsschicht das Anpressen und Bewegen eines rotierenden Zylinders an der Basis umfasst, wobei der rotierende Zylinder aus einer Zusammensetzung eines Beschichtungsmaterials der Schicht aufweist.

4. Verfahren nach Anspruch 3, wobei das Bilden der die wenigstens einen Beschichtungsschicht aufweisenden Schicht ein Formen eines Gradienten im Beschichtungsmaterial der Schicht senkrecht zur Basis umfasst, wobei der rotierende Zylinder Kupfer, Zink, Nickel, Blei, Antimon, Aluminium, Zinn, Molybdändisulfid, Wolframdisulfid, Graphit, ein Polymer oder eine beliebige Kombinationen daraus aufweist.

5. Verfahren nach Anspruch 1, ferner umfassend ein spanabtragendes Bearbeiten der die wenigstens eine Beschichtungsschicht umfassenden Schicht zum Verändern der Dicke, der Textur oder einer beliebigen Kombination daraus.

6. Verfahren nach Anspruch 1, wobei die Baugruppe ein Ventil und ein Ventilsitz ist, wobei die Beschichtung auf einem jedem von mindestens einigen Grübchen einer Vielzahl von Grübchen angeordnet ist, die auf einer Oberfläche der Basis ausgebildet sind, wobei jedes Grübchen eine Tiefe von mehr als 50 Mikrometern aufweist.

7. Verfahren nach Anspruch 6, wobei das Bilden der die aufweisenden Schicht das Anpressen und Bewegen eines rotierenden Zylinders an der Basis umfasst, wobei der rotierende Zylinder ein Beschichtungsmaterial der Beschichtung aufweist.

## Revendications

1. Procédé comprenant la disposition d'un revêtement sur une base d'un assemblage par utilisation d'un traitement de surfaçage par frottement, dans lequel le revêtement a une densité supérieure à 98 % de la densité théorique du revêtement et une dilution inférieure à 0,5 % en volume du revêtement.

2. Procédé selon la revendication 1, dans lequel l'assemblage est un palier lisse et un arbre, dans lequel la disposition d'un revêtement sur une base comprend la formation d'une seule couche d'au moins une couche de revêtement ayant une épaisseur de revêtement supérieure à 50 micromètres, une densité supérieure à environ 98 % de la densité théorique de la seule couche, et une dilution inférieure à 0,5 % en volume de la seule couche, et la base comprend une zone affectée par la chaleur ayant une épaisseur inférieure à 5 micromètres, collée à la seule couche de l'au moins une couche de revêtement.

3. Procédé selon la revendication 2, dans lequel la formation de la seule couche de l'au moins une couche de revêtement comprend le forgeage et le déplacement d'un cylindre rotatif sur la base, et dans lequel le cylindre rotatif comprend une composition de matériau de revêtement de la seule couche.

4. Procédé selon la revendication 3, dans lequel la formation de la seule couche de l'au moins une couche de revêtement comprend la formation d'un gradient dans la composition de matériau de revêtement de la seule couche, le long d'une direction perpendiculaire à la base, et dans lequel le cylindre rotatif comprend du cuivre, du zinc, du nickel, du plomb, de l'antimoine, de l'aluminium, de l'étain, du disulfure de molybdène, du disulfure de tungstène, du graphite, un polymère ou l'une quelconque de leurs combinaisons.

5. Procédé selon la revendication 1, comprenant en outre l'usinage de la seule couche formée de l'au moins une couche de revêtement pour modifier l'épaisseur du revêtement, la texture de surface, ou une combinaison de celles-ci, de la seule couche.

6. Procédé selon la revendication 1, dans lequel l'assemblage est une soupape et un siège de soupape, le revêtement est disposé sur chacun d'au moins certains creux d'une pluralité de creux formées sur une surface de la base, et dans lequel chaque creux a une profondeur supérieure à 50 micromètres.

7. Procédé selon la revendication 6, dans lequel la disposition du revêtement comprend le forgeage et le déplacement d'un cylindre rotatif sur la base, et dans lequel le cylindre rotatif comprend un matériau de revêtement du revêtement.
